# EUROPÄISCHE PATENTSCHRIFT

(11) **EP 4 143 110 B1**
(45) Veröffentlichungstag und Bekanntmachung des Hinweises auf die Patenterteilung: **17.07.2024**
(21) Anmeldenummer: 21710465.2
(22) Anmeldetag: 08.03.2021
(51) Int. Cl.: B65G 21/20, B65G 47/84

(54) **BEHANDLUNGSMASCHINE UND -VERFAHREN FÜR BEHÄLTER**
TREATMENT MACHINE AND TREATMENT METHOD FOR CONTAINERS
MACHINE ET PROCÉDÉ DE TRAITEMENT POUR CONTENANTS

(30) Priorität: 30.04.2020 DE 102020111855
(43) Veröffentlichungstag der Anmeldung: 08.03.2023
(73) Patentinhaber: Krones AG, 93073 Neutraubling (DE)
(72) Erfinder: KUPKA, Martin, 93073 Neutraubling (DE); SCHEIBENPFLUG, Robert, 93073 Neutraubling (DE)
(74) Vertreter: Grünecker Patent- und Rechtsanwälte PartG mbB
(86) Internationale Anmeldenummer: PCT/EP2021/055732
(87) Internationale Veröffentlichungsnummer: WO 2021/219281

(56) Entgegenhaltungen:
- DE-U1- 20 208 127
- FR-A1- 2 950 040
- US-A- 3 669 244
- US-A- 5 211 280
- US-A1- 2011 127 143
- US-B2- 8 490 780
- US-B2- 9 828 186

## Beschreibung

Die Erfindung betrifft eine Behandlungsmaschine für Behälter mit den Merkmalen des Oberbegriffs von Anspruch 1 und ein Behandlungsverfahren für Behälter mit den Merkmalen des Oberbegriffs von Anspruch 9.

Üblicherweise umfassen derartige Behandlungsmaschinen und -verfahren für Behälter einen Transporteur zum Transport der Behälter als Behältermassenstrom und ein Behandlungsaggregat zur Behandlung der Behälter. Beispielsweise kann es sich bei dem Behandlungsaggregat um ein Etikettier- oder Direktdruckaggregat handeln, mit dem auf die Behälter ein Etikett bzw. ein Direktdruck zur Produktkennzeichnung und/oder -werbung aufgebracht wird. Bei dem Transporteur kann es sich beispielsweise um ein Karussell mit daran in regelmäßigen Abständen angeordneten Behälteraufnahmen handeln, so dass sich die Behälter bei der Behandlung an den dafür vorgesehen Behandlungspositionen befinden und/oder dabei gedreht werden können. Beispielsweise werden die Behälter jeweils beim Etikettieren um ihre Längsachse gedreht, so dass das Etikett gleichmäßig auf die Behälteroberfläche aufgebracht werden kann.

Bei der Übergabe an den Transporteur werden die Behälter zunächst mit einer Einteilschnecke auf die erforderlichen Abstände gebracht und im Einlauf des Karussells mit einer Führungseinrichtung geführt an die Behälteraufnahmen des Transporteurs übergeben.

Da die Führungseinrichtung üblicherweise an den jeweilig zu verarbeitenden Behältertyp angepasst wird, umfasst sie beispielsweise gegeneinander austauschbare Führungsschienen. Nachteilig dabei ist, dass der Wechsel der austauschbaren Führungsschienen einen entsprechenden Zeitaufwand beim Umrüsten der Behandlungsmaschine mit sich bringt. Zudem können die Führungsschienen vertauscht werden.

Die DE 20 2015 105861 U1 offenbart eine Vorrichtung zum Verbringen von Behältern eines Behälterstroms in einen vorgegebenen Teilungsabstand, wobei ein Abstand zwischen zwei gegenüberliegenden Führungsgeländem und/oder der Abstand zwischen der Einteilschnecke und einem gegenüberliegenden Führungsgeländer jeweils mittels eines oder mehrerer Aktuatoren motorisch einstellbar ist.

Die DE 20 2018 104399 U1 offenbart eine Etikettiermaschine zum Etikettieren von Behältern mit zwei beweglich gelagerten Zentrierelementen.

Nachteilig bei den bekannten verstellbaren Führungsgeländern bzw. Zentrierelementen ist, dass sie für einen kompakten Aufbau im Einlauf des Transporteurs ungeeignet sind und bei einer bloßen Größenanpassung keine ausreichende Stabilität aufweisen. US9828186B2 offenbart eine Behandlungsmaschine gemäß dem Oberbegriff des Anspruchs 1, sowie ein Behandlungsverfahren gemäß dem Oberbegriff des Anspruchs 9.

Aufgabe der vorliegenden Erfindung ist es daher, eine Behandlungsmaschine und ein Behandlungsverfahren für Behälter bereitzustellen, bei dem die Führungseinrichtung im Einlauf des Transporteurs auf verschiedene Behälter flexibel einstellbar und dennoch kompakt ausgebildet ist.

Zur Lösung der Aufgabenstellung stellt die Erfindung eine Behandlungsmaschine mit den Merkmalen des Anspruchs 1 bereit. Vorteilhafte Ausführungsformen der Erfindung sind in den Unteransprüchen genannt.

Dadurch, dass die Führungsschiene an den verstellbaren Halterungsstreben der Führungseinrichtung angegliedert ist, kann sie auf die verschiedenen Behälter flexibel eingestellt werden und ist mehrfach stabil gelagert. Dadurch, dass die Führungseinrichtung das Getriebe mit der Antriebswelle und mit den Abtriebselementen umfasst, wobei die Abtriebselemente mit den verstellbaren Halterungsstreben gekoppelt sind, kann die Verstellbewegung von der Antriebswelle auf die verstellbaren Halterungsstreben gleichermaßen übertragen werden. Folglich können also die Halterungsstreben ausgehend von der Verstellbewegung gemeinsam verstellt werden. Dadurch ist die Mechanik zur Verstellung der Halterungsstreben mit der daran angegliederten Führungsschiene besonders kompakt ausgebildet und kann so auch im Einlauf des Transporteurs als kompakter Aufbau realisiert werden.

Die Behandlungsmaschine kann in einer Getränkeverarbeitungsanlage angeordnet sein. Die Behandlungsmaschine kann einer Abfüllanlage zum Abfüllen eines Produkts in die Behälter und/oder einem Verschließer zum Verschließen der Behälter mit Verschlüssen nachgeordnet sein. Die Behandlungsmaschine kann dem Füllprozess aber auch vorgeschaltet sein und/oder einem Behälterherstellungsprozess direkt nachgeschaltet sein. Losgelöst davon, kann es sich auch um eine Behandlungsmaschine handeln, die keiner Anlage zugeordnet ist, sondern im sogenannten Stand-Alone-Betrieb arbeitet. Insbesondere kann es sich bei der Behandlungsmaschine um eine Etikettiermaschine oder ein Direktdruckmaschine handeln.

Die Behälter können dazu vorgesehen sein, ein Füllgut, wie beispielsweise ein Getränk, ein Nahrungsmittel, ein Hygieneartikel, eine Paste, ein chemisches, biologisches und/oder pharmazeutisches Produkt aufzunehmen. Insbesondere kann es sich bei den Behältern um Getränkebehälter handeln. Die Behälter können als Flaschen, insbesondere als Kunststoffflaschen oder Glasflaschen ausgebildet sein. Bei Kunststoffflaschen kann es sich im speziellen um PET-, PEN-, HD-PE oder PP-Flaschen handeln. Ebenso kann es sich um biologisch abbaubare Behälter oder Flaschen handeln, deren Hauptbestandteile aus nachwachsenden Rohstoffen, wie zum Beispiel Zuckerrohr, Weizen oder Mais hergestellt werden. Die Behälter können mit einem Verschluss versehen sein, beispielsweise mit einem Kronkorken, Schraubverschluss, Abreißverschluss oder dergleichen.

Der Transporteur kann ein Karussell und/oder einen Lineartransporteur umfassen. Das Karussell kann daran mitlaufend angeordnete Behälteraufnahmen umfassen, mit denen die Behälter bei der Behandlung in einem vorbestimmten Raster transportiert werden. Die Behälteraufnahmen können jeweils einen Drehteller und eine Zentrierglocke umfassen, mit denen ein Behälter aufgenommen wird. Ebenso kann es sich um ein sogenanntes Neck-handling handeln, bei dem die Behälteraufnahmen als Klammern ausgebildet sind, um die Behälter nur von der Behältermündung her aufzunehmen. Vorzugsweise kann das Karussell um eine vertikale Achse mittels eines Antriebs drehbar sein. Mit "vertikal" kann hier die Richtung gemeint sein, die auf den Erdmittelpunkt zeigt bzw. in Richtung der Schwerkraft verläuft. Der Lineartransporteur kann ein Förderband umfassen, auf dem die Behälter stehend transportiert werden. Der Transporteur kann dazu ausgebildet sein, die Behälter intermittierend oder kontinuierlich zu transportieren.

Das Behandlungsaggregat kann als Etikettier- oder Direktdruckaggregat ausgebildet sein, um die Behälter mit einem Etikett zu versehen und/oder mit einem Direktdruck zu bedrucken. Denkbar ist jedoch auch, dass es sich um ein anderweitiges Behandlungsaggregat handelt, wie beispielsweise ein Füllventil, ein Verschließkopf, eine Reinigungsstation oder dergleichen. Das Behandlungsaggregat kann am Transporteur angegliedert sein, um die Behälter unmittelbar am Transporteur zu behandeln. Beispielsweise kann das Etikettier- oder Druckaggregat umfänglich am Karussell angeordnet sein. Denkbar ist auch, dass das Behandlungsaggregat dem Transporteur vor- oder nachgeordnet ist.

Die Führungseinrichtung kann am Einlauf oder Auslauf des Transporteurs angeordnet sein. Der Einlauf kann ein Übergangsbereich sein, in dem die Behälter von einem vorgeordneten Transporteur an den Transporteur übergeben werden, beispielsweise von einem Einlaufstern und/oder einer Einteilschnecke zum Karussell. Beim Auslauf kann es sich um einen Übergangsbereich handeln, in dem die Behälter nach der Behandlung an einen nachfolgenden Transporteur übergeben werden, beispielsweise von dem Karussell an einen Auslaufstern. Insbesondere kann die Führungseinrichtung mit der verstellbaren Führungsschiene dazu ausgebildet sein, die Behälter in dem Übergangsbereich von dem vorgeordneten Transporteur zu dem Transporteur zu führen, beispielsweise von dem Einlaufstern zum Karussell. Die Führungsschiene kann als Führungsgeländer oder als Einlaufzunge ausgebildet sein und/oder entlang einer Transportrichtung des Transporteurs verlaufen. Die Führungsschiene kann beispielsweise derart ausgebildet sein, dass die Behälter beim Transport daran entlang gleiten, insbesondere mit ihrem Behälterkörper, Behälterhals und/oder mit ihrer Behälterschulter. Die Führungsschiene kann bogenartig, insbesondere teilkreisförmig ausgebildet sein. Dadurch verläuft sie wenigstens teilweise entlang der kreisförmigen Transportbewegung des Karussells. Denkbar ist auch, dass die Führungsschiene gerade ausgebildet ist, insbesondere wenn sie zur Führung der Behälter am Lineartransporteur angeordnet ist. Die Führungsschiene kann jedoch jede geeignete Form aufweisen, um die Behälter beim Transport mit dem Transporteur zu führen. Die Form der Führungsschiene kann insbesondere abschnittsweise parallel entlang einer Transportbahn des Transporteurs verlaufen.

Die Führungsschiene kann an Enden der verstellbaren Halterungsstreben angegliedert sein. Die entsprechend anderen Enden der verstellbaren Halterungsstreben können mit den Abtriebselementen des Getriebes gekoppelt sein. Beispielsweise können die Halterungsstreben quer und die Führungsschiene längs zu einer Transportrichtung des Transporteurs verlaufen. Mit "quer zur Transportrichtung" kann eine Richtung gemeint sein, die am Transporteur in einer Behälterradialrichtung senkrecht zur Transportrichtung nach außen verläuft. Die Führungseinrichtung kann Lager, insbesondere Längslager umfassen, um die verstellbaren Halterungsstreben zu lagern. Die Längslager können beispielsweise als Längskugellager oder als Längsgleitlager ausgebildet sein. Denkbar sind jedoch auch bogenförmige Lager für die verstellbaren Halterungsstreben.

Mit "Getriebe" kann hier eine Anordnung von mechanischen Elementen gemeint sein, die zur Übertragung einer Bewegung und/oder Kraft miteinander form- und/oder kraftschlüssig verbunden sind, wobei die Verstellbewegung der Antriebswelle dadurch auf die verstellbaren Halterungsstreben mit einem vorbestimmten Verhältnis übertragen wird. Die mechanischen Elemente können die Antriebswelle, die Abtriebswelle, weitere form- und/oder kraftschlüssige Element umfassen. Mit "form- und/oder kraftschlüssigen Elementen" können hier beispielsweise Zahnräder, Schnecken, Zahnstangen, Reibräder, Riemen, Zahnriemen und/oder dergleichen gemeint sein. Das Getriebe kann Lager umfassen, um die Antriebswelle und die Abtriebselemente und/oder weitere mechanische Elemente verstellbar zu lagern.

Die Antriebswelle kann als Gelenkwelle mit mehreren zueinander geknickt verlaufenden Wellensegmenten ausgebildet sein, wobei die Wellensegmente jeweils mit einer der verstellbaren Halterungsstreben über eines der Abtriebselemente gekoppelt ist. Dadurch können die verstellbaren Halterungsstreben schräg zueinander verstellt werden, sodass ein bogenförmiger Verlauf der daran angegliederte Führungsschiene möglich ist. Anders ausgedrückt kann die Führungsschiene entlang eines bogen- oder teilkreisförmigen Transportsegments des Transporteurs verlaufen und durch die schräg zueinander verlaufenden, verstellbaren Halterungsstreben quer zum Transportsegment verstellt werden. Denkbar ist, dass die Führungsschiene gleitend an wenigstens einer der verstellbaren Halterungsstreben angegliedert ist. Da sich Abstände von Angliederungspunkten für die Führungsschiene bei der Verstellung der schräg zueinander verlaufenden Halterungsstreben ändern können, kann so die Führungsschiene ohne ein Verklemmen daran angegliedert werden. Insbesondere kann die Führungsschiene an genau einer der verstellbaren Halterungsstreben fest angegliedert und an den übrigen der verstellbaren Halterungsstreben gleitend angegliedert sein. Die Führungsschiene kann beispielsweise über ein Gleitlager, wie beispielsweise eine Schwalbenschanzführung an wenigstens eine der verstellbaren Halterungsstreben angegliedert sein. Mit "geknickt verlaufenden Wellensegmenten" können hier zueinander in einem Winkel bzw. schräg verlaufende Wellensegmente gemeint sein.

Die geknickt verlaufenen Wellensegmente können über wenigstens ein Kardangelenk miteinander verbunden sein. Dadurch kann die Verstellbewegung besonders einfach auf alle Wellensegmente übertragen werden. Mit Gelenkwelle kann hier eine Kardanwelle gemeint sein. Bei drei verstellbaren Haltungsstreben kann die Gelenkwelle entsprechend drei zueinander geknickt verlaufende Wellensegmente umfassen, die über zwei Kardangelenke miteinander verbunden sind.

Die verstellbaren Halterungsstreben können Zahnstangen und die Abtriebselemente können Zahnräder umfassen, wobei die Zahnräder jeweils in eine der Zahnstangen zur Verstellung eingreifen. Dadurch kann die Verstellbewegung als Drehbewegung erfolgen und so besonders einfach in eine lineare Bewegung der verstellbaren Halterungsstreben übersetzt werden. Entsprechend können die Zahnräder an den Wellensegmenten angegliedert sein. Dadurch können die Zahnstangen schräg zueinander verstellt werden.

Die Führungseinrichtung umfasst erfindungsgemäß ein Gehäuse, in dem die Antriebswelle, die Abtriebselemente und die verstellbaren Halterungsstreben gelagert sind. Dadurch sind das Getriebe und die verstellbaren Halterungsstreben vor Verschmutzungen geschützt und/oder können gemeinsam gelagert werden. Das Gehäuse kann Lager für die Antriebswelle, die Abtriebselemente und/oder für die verstellbaren Halterungsstreben umfassen.

Die Führungseinrichtung kann einen elektrischen, pneumatischen oder hydraulischen Antrieb für die Antriebswelle des Getriebes umfassen. Dadurch kann die Führungsschiene automatisch auf verschiedene Behältertypen eingestellt werden. Bei dem elektrischen Antrieb kann es sich beispielsweise um einen Servomotor mit einem Drehgeber für eine Positionsgenaue Regelung der Verstellbewegung handeln. Denkbar ist, dass die Behandlungsmaschine eine Maschinensteuerung umfasst, um den Antrieb zu steuern. Bei der Maschinensteuerung kann es sich beispielsweise um Computersystem mit einer CPU, einer Speichereinheit, einer Netzwerkschnittstelle, einer Ein-/Ausgabeeinheit (beispielsweise ein Touchscreen) und/oder mit einer Schnittstelle für Regelungssignale für den Antrieb handeln. Alternativ oder zusätzlich ist denkbar, dass die Führungseinrichtung ein manuelles Antriebselement, wie beispielsweise ein Handrad oder eine Kurbel umfasst. Dadurch ist es möglich, die Führungsschiene manuell zu verstellen.

Die Führungsschiene ist erfindungsgemäß in einer Behälterradialrichtung und/oder in einer Behälterlängsrichtung verstellbar.

Dadurch kann sie besonders flexibel an verschiedene Behältertypen angepasst werden. Mit Behälterradialrichtung kann hier eine horizontale Richtung quer zu einer Transportrichtung des Transporteurs gemeint sein. Mit Behälterlängsrichtung kann hier eine vertikale Richtung gemeint sein.

Die verstellbaren Halterungsstreben können derart angeordnet sein, dass damit die daran angegliederte Führungsschiene in der Behälterradialrichtung verstellbar ist. Dadurch kann die Führung der Behälter in der horizontalen Richtung und quer zur Transportrichtung des Transporteurs verstellt und auf die jeweiligen Behältertypen flexibel angepasst werden.

Die Führungseinrichtung umfasst erfindungsgemäß eine Höhenverstelleinrichtung, mit der die Führungsschiene separat von der Verstellung durch die verstellbaren Halterungsstreben entlang der Behälterlängsrichtung höhenverstellbar ist. Folglich kann auch die Führung in der vertikalen Richtung an die jeweiligen Behältertypen angepasst werden. Beispielsweise ist es dadurch möglich, die Führung abhängig von der Behälterschulter und/oder der Höhe des Behälterkörpers zu verstellen. Die Höhenverstelleinrichtung ist erfindungsgemäß als höhenverstellbarer Träger ausgebildet, an dem das Getriebe, die verstellbaren Halterungsstreben und die Führungsschiene als Einheit angegliedert sind. Beispielsweise kann die Höhenverstelleinrichtung einen Linearmotor umfassen, mit der eine vertikale Position der Einheit aus dem Getriebe, den verstellbaren Halterungsstreben und der Führungsschiene verstellt wird.

Die Führungsschiene kann eine wechselbare Verschleißleiste umfassen. Dadurch kann ein besonders verschleißbehafteter Bereich der Führungsschiene einfach ausgewechselt werden. Die wechselbare Verschleißleiste kann beispielsweise aus einem Kunststoffmaterial bestehen, das die Behälter besonders schonend führt.

Darüber hinaus stellt die Erfindung zur Lösung der Aufgabenstellung ein Behandlungsverfahren für Behälter mit den Merkmalen des Anspruchs 9 bereit.

Dadurch, dass die Führungsschiene mit den mehreren, verstellbaren Halterungsstreben der Führungseinrichtung verstellt wird, kann sie auf die verschiedenen Behälter flexibel eingestellt werden und ist mehrfach stabil gelagert. Dadurch, dass in dem Getriebe durch die Antriebswelle mehrere Abtriebselemente angetrieben werden, die mit den verstellbaren Halterungsstreben gekoppelt sind, kann die Verstellbewegung von der Antriebswelle auf die verstellbaren Halterungsstreben gleichermaßen übertragen werden. Folglich können also die Halterungsstreben ausgehend von der Verstellbewegung gemeinsam bewegt werden. Dadurch ist die Mechanik zur Verstellung der Halterungsstreben mit der daran angegliederten Führungsschiene besonders kompakt ausgebildet und kann so auch im Einlauf des Transporteurs als kompakter Aufbau realisiert werden.

Weitere Merkmale und Vorteile der Erfindung werden nachfolgend anhand der in den Figuren dargestellten Ausführungsbeispiele näher erläutert. Dabei zeigt:
- Figur 1: ein Ausführungsbeispiel einer Behälterbehandlungsmaschine in einer Draufsicht; und
- Figuren 2A - 2D: die Führungseinrichtung der Behälterbehandlungsmaschine aus der Figur 1 in einer perspektivischen Ansicht, in einer Draufsicht bei geschlossenem Gehäuse, in einer perspektivischen Explosionsdarstellung und in einer Draufsicht bei geöffnetem Gehäuse.

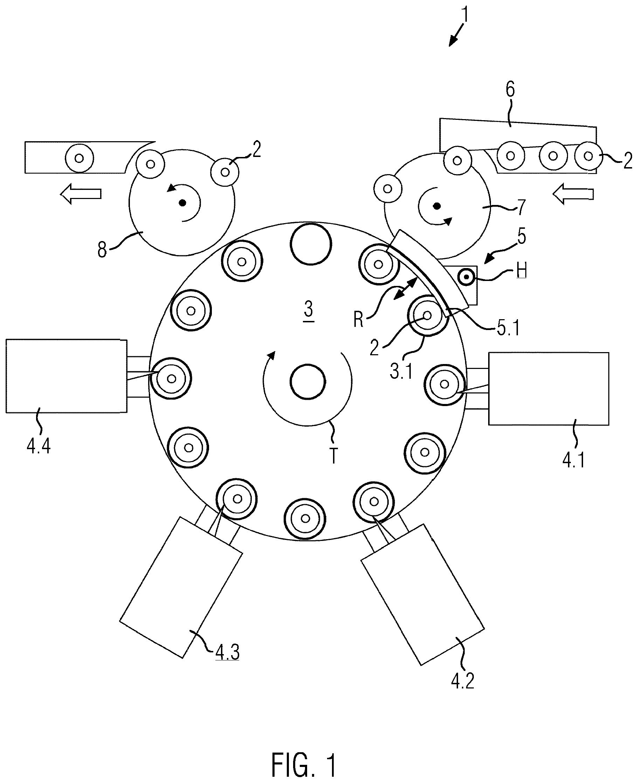

In der Figur 1 ist ein Ausführungsbeispiel einer Behälterbehandlungsmaschine 1 in einer Draufsicht dargestellt. Zu sehen ist, dass die Behandlungsmaschine 1 den Transporteur 3 zum Transport der Behälter 2 als Behältermassenstrom und die Behandlungsaggregaten 4.1 - 4.4 zur Behandlung der Behälter umfasst:
Der Transporteur 3 ist hier beispielsweise als Karussell mit den Behälteraufnahmen 3.1 ausgebildet, die jeweils einen Behälterteller und eine Zentrierglocke umfassen (hier nicht dargestellt), um darin die Behälter 2 in einem vorbestimmten Raster zu transportieren. Umfänglich an dem Transporteur 3 sind die Behandlungsaggregate 4.1 - 4.4 angegliedert, die hier beispielsweise als Etikettieraggregate ausgeführt sind. Beim Transport mit dem Transporteur 3 werden die Behälter 2 mit den Behälteraufnahmen 3.1 gedreht und dabei von den Behandlungsaggregat 4.1 - 4.4 Etiketten umfänglich daran aufgebracht.

Zu sehen ist auch, dass die Behälter 2 vor dem Einlauf des Transporteurs 3 zunächst mit der Einteilschnecke 6 auf das vorbestimmte Raster gebracht und dann mit dem Einlaufstern 7 an den Transporteur 3 übergeben werden.

Darüber hinaus umfasst die Behandlungsmaschine 1 die Führungseinrichtung 5, um die Behälter 2 bei der Übergabe vom Einlaufstern 7 an den Transporter 3 mit der verstellbaren Führungsschiene 5.1 zu führen. Da verschiedene Behältertypen unterschiedliche Durchmesser und Schulterkonturen aufweisen, muss die Führungsschienen 5.1 bei einem Wechsel des Behältertyps entsprechend verstellt werden. Dazu ist die Führungsschiene 5.1 in der Behälterradialrichtung R, (also horizontal und quer zur Transportrichtung T) und in der Behälterlängsrichtung H (also vertikal bzw. senkrecht zur Zeichenebene) verstellbar ausgebildet.

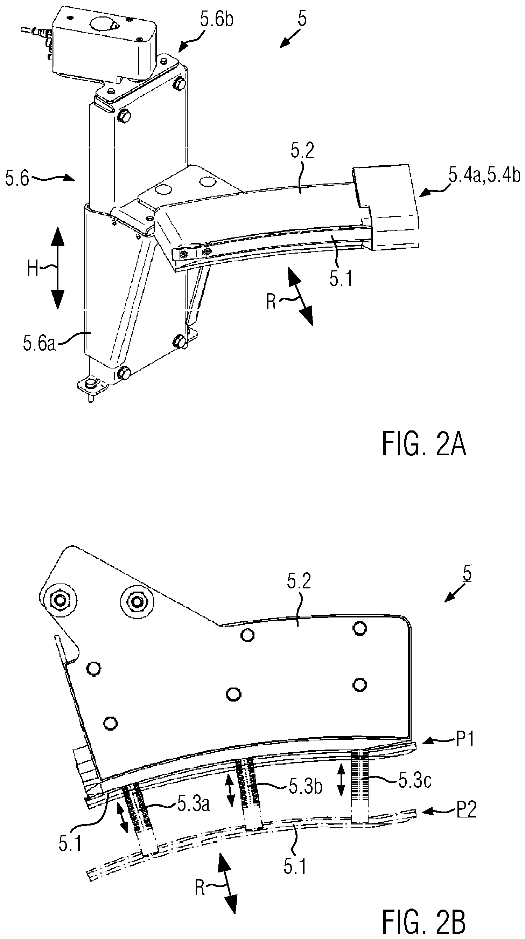

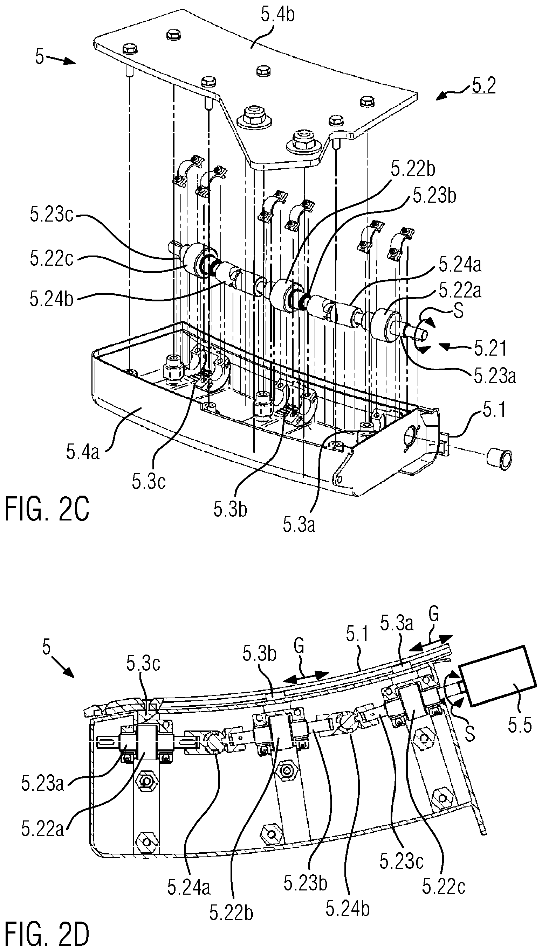

Die Führungseinrichtung 5 der Behälterbehandlungsmaschine 1 aus der Figur 1 wird näher anhand der Figuren 2A - 2D näher erläutert: Darin ist sie in einer perspektivischen Ansicht (Figur 2A), in einer Draufsicht bei geschlossenem Gehäuse (Figur 2B), in einer perspektivischen Explosionsdarstellung (Figur 2C) und in einer Draufsicht bei geöffneten Gehäuse (Figur2D) dargestellt.

Zu sehen ist in der Figur 2B, dass die Führungseinrichtung 5 mehrere verstellbare Halterungsstreben 5.3a - 5.3c umfasst, an denen die Führungsschiene 5.1 angegliedert ist. Über die verstellbaren Halterungsstreben 5.3a - 5.3c ist es möglich, die Führungsschiene 5.1 zwischen den Positionen P1 und P2 kontinuierlich in der Behälterradialrichtung R zu verstellen. Die Verstellung der Halterungsstreben 5.3a - 5.3c erfolgt mit dem Getriebe 5.2, das näher anhand der nachfolgenden Figuren 2C und 2D erläutert wird.

In der Figur 2A ist zu sehen, dass das Getriebe 5.2 wiederum mit seinem Gehäuse 5.4a, 5.4b an der Höhenverstelleinrichtung 5.6 angeordnet ist, sodass das Getriebe 5.2, die verstellbaren Halterungsstreben 5.3a - 5.3c und die Führungsschiene 5.1 gemeinsam höhenverstellbar sind. Dadurch kann die Führungsschiene 5.1 zusätzlich entlang der Behälterlängsrichtung H in der Höhe eingestellt werden, sodass die Führung in der vertikalen Richtung an den jeweiligen Behältertyp angepasst werden kann. Die Höhenverstelleinrichtung 5.6 ist beispielsweise mit dem höhenverstellbaren Träger 5.6a und dem Linearmotor 5.6b ausgebildet.

In den Figuren 2C und 2D ist der Aufbau der Führungseinrichtung 5 im Innneren genauer dargestellt. Zu sehen ist, dass das Getriebe 5.2 die Antriebswelle 5.21 und die Abtriebselemente 5.22a - 5.22c umfasst, wobei die Abtriebselemente 5.22a - 522c mit den verstellbaren Halterungsstreben 5.3a - 5.3c gekoppelt sind, um die Verstellbewegung S der Antriebswelle 5.21 auf die verstellbaren Halterungsstreben 5.3a- 5.3c zu übertragen. Der Antrieb 5.5 für die Antriebswelle 5.21 ist hier beispielsweise als Servomotor mit einem Drehgeber ausgebildet, der in bekannter Art und Weise mit einer hier nicht dargestellten Maschinensteuerung angesteuert werden, so sodass er eine gezielte Drehbewegung ausführt, die dann als Verstellbewegung S auf die Antriebswelle 5.21 übertragen wird. Über den Drehgeber ist so auch die genaue Stellung der Antriebswelle 5.21 und damit die Position der Führungsschiene 5.1 bekannt.

Die Antriebswelle 5.21 ist hier als Gelenkwelle (Kardanwelle) mit mehreren zueinander geknickt verlaufenden Wellensegmenten 5.23a - 5.23c ausgebildet. Die Wellensegmente 5.23a - 5.23c sind entsprechend über die Kardangelenk der 5.24a, 5.24b derart miteinander verbunden, dass die Verstellbewegung S auf jedes der Wellensegmente 5.23a - 5.23b gleichermaßen übertragen wird.

Die Wellensegmente 5.23a - 5.23c sind wiederum mit den verstellbaren Halterungsstreben 5.3a - 5.3c über die Abtriebselemente 5.22a - 5.22c gekoppelt. Sie sind als Zahnräder ausgeführt, die jeweils einem Wellensegmente 5.23a - 5.23c zugeordnet und damit fest verbunden sind. Als Gegenstück dazu umfassen die verstellbaren Halterungsstreben 5.3a - 5.3c Zahnstangen, wobei die Zahnräder der Abtriebselemente 5.22a - 5.22c zur Verstellung in die Verzahnung der Zahnstangen eingreifen.

Des Weiteren ist zu sehen, dass die Führungseinrichtung 5 das Gehäuse 5.4a, 5.4b umfasst, in dem die Antriebswelle 5.21, die Abtriebselemente 5.22a - 5.22c und die verstellbaren Halterungsstreben 5.3a - 5.3c gelagert sind: Das erste Gehäuseteil 5.4a umfasst zur Lagerung der Antriebswelle 5.21 drei Paare von Lagerbuchsen, in die die Wellensegmente 5.23a - 5.23c derart eingelegt sind, dass jeweils ein Paar Lagerbuchsen ein Abtriebselement 5.22a - 5.22c und das zugehörige Wellensegment 5.23a - 5.23c drehbar lagert. Die verstellbaren Halterungsstreben 5.3a - 5.3c sind ebenfalls am ersten Gehäuseteil 5.4a mit Längsführungen gelagert, um eine präzise Verstellbewegung zu gewährleisten. Das zweite Gehäuseteil 5.4b ist als Abdeckung mit dem ersten Gehäuseteil 5.4a verbunden.

Zu sehen ist auch, dass die Führungsschiene 5.1 am Ende der verstellbaren Halterungsstrebe 5.3c mittels einer Schraube befestigt ist. Dagegen ist sie an den Enden der beiden anderen verstellbaren Halterungsstreben 5.3a und 5.3b entlang ihrer Längsrichtung G gleitend gelagert. Wie in der Figur 2B deutlicher zu sehen ist, sind die verstellbaren Halterungsstreben 5.3a - 5.3c zueinander schräg verstellbar. Folglich ändern sich bei der Verstellung auch die Abstände der Enden der verstellbaren Halterungsstreben 5.3a - 5.3c und damit die Angliederungspunkte für die Führungsschiene 5.1, was durch die gleitende Führung entsprechend kompensiert wird. Beispielsweise kann es sich bei der gleitenden Führung um eine Schwalbenschwanzführung handeln.

Die Führungsschien 5.1 kann also mittels des Antriebs 5.5, dem Getriebe 5.2 und den damit verstellbaren Halterungsstreben 5.3a - 5.3b in der Behälterradialrichtung R verstellt werden.

Um die Behälter 2 vor einer Beschädigung zu schützen, umfasst die Führungsschiene 5.1 eine wechselbare Verschleißleiste aus einem Kunststoffmaterial.

Die Behälterbehandlungsmaschine aus der Figur 1 bzw. die Führungseinrichtung 5 aus den Figu-ren 2A - 2D wird wie folgt eingesetzt: Die Behälter 2 werden mit dem Transporteur 3 als Behältermassenstrom in den Behälteraufnahmen 3.1 transportiert und dabei mit den Behandlungsaggregaten 4.1 - 4.4 behandelt. Beispielsweise werden sie dabei mit einem Etikett versehen. Die Behälter 2 werden beim Transport abschnittsweise im Bereich des Einlaufs mit der verstellbaren Führungsschiene 5.1 der Führungseinrichtung 5 geführt.

Bei einem Wechsel auf einen anderen Behältertyp wird die Führungsschiene 5.1 mit den verstellbaren Halterungsstreben 5.3a - 5.3c in der Behälterradialrichtung R (horizontal und quer zur Transportrichtung T) verstellt. Dazu wird mittels einer nicht dargestellten Maschinensteuerung ein Steuersignal an den Antrieb 5.5 übertragen, sodass dieser die Verstellbewegung S durchführt. Die Verstellbewegung S wird über das Getriebe 5.2 mit der Antriebswelle 5.21 und den Abtriebselementen 5.22a - 5.22c auf die verstellbaren Halterungsstreben 5.3a - 5.3c übertragen und dadurch die daran angegliederte Führungsschiene 5.1 in der Behälterradialrichtung R verstellt.

Zudem wird beim Wechsel des Behältertyps optional auch die Führungsschiene 5.1 mit der Höhenverstelleinrichtung 5.6 in der Behälterlängsrichtung H höhenverstellt.

Dadurch, dass die Führungsschiene 5.1 an den verstellbaren Halterungsstreben 5.3a - 5.3c der Führungseinrichtung 5 angegliedert ist, kann sie auf die verschiedenen Behälter 2 flexibel eingestellt werden und ist mehrfach stabil gelagert. Dadurch, dass die Führungseinrichtung 5 das Getriebe 5.2 mit der Antriebswelle 5.21 und mit den Abtriebselementen 5.22a - 5.22c umfasst, wobei die Abtriebselemente 5.22a - 5.22c mit den verstellbaren Halterungsstreben 5.3a - 5.3c gekoppelt sind, kann die Verstellbewegung S von der Antriebswelle 5.21 auf die verstellbaren Halterungsstreben 5.3a - 5.3c gleichermaßen übertragen werden. Folglich können also die Halterungsstreben 5.3a - 5.3c ausgehend von der Verstellbewegung S gemeinsam verstellt werden. Dadurch ist die Mechanik zur Verstellung der Halterungsstreben 5.3a - 5.3c mit der daran angegliederten Führungsschiene 5.1 besonders kompakt ausgebildet und kann so auch im Einlauf des Transporteurs 3 als kompakter Aufbau realisiert werden.

Es versteht sich, dass in den zuvor beschriebenen Ausführungsbeispielen genannte Merkmale nicht auf diese Kombinationen beschränkt sind, sondern auch einzelnen oder in beliebigen anderen Kombinationen möglich Die Erfindung wird durch die Ansprüche definiert.

## Patentansprüche

1. Behandlungsmaschine (1) für Behälter (2), insbesondere Getränkebehälter, mit
- einem Transporteur (3) zum Transport der Behälter (2) als Behältermassenstrom, und
- mit einem Behandlungsaggregat (4.1 - 4.4) zur Behandlung der Behälter (2), wobei der Transporteur (3) eine Führungseinrichtung (5) mit einer verstellbaren Führungsschiene (5.1) für die Behälter (2) umfasst,
wobei die Führungseinrichtung (5) mehrere verstellbare Halterungsstreben (5.3a - 5.3c) umfasst, an denen die Führungsschiene (5.1) angegliedert ist, und
dass die Führungseinrichtung (5) ein Getriebe (5.2) mit einer Antriebswelle (5.21) und mit mehreren Abtriebselementen (5.22a - 5.22c) umfasst, wobei die Abtriebselemente (5.22a - 5.22c) mit den verstellbaren Halterungsstreben (5.3a - 5.3c) gekoppelt sind, um eine Verstellbewegung (S) von der Antriebswelle (5.21) auf die verstellbaren Halterungsstreben (5.3a - 5.3c) zu übertragen, wobei die Führungsschiene (5.1) in einer Behälterradialrichtung (R) und/oder in einer Behälterlängsrichtung (H) verstellbar ist, wobei die Führungseinrichtung (5) eine Höhenverstelleinrichtung (5.6) umfasst, mit der die Führungsschiene (5.1) separat von der Verstellung durch die verstellbaren Halterungsstreben (5.3a - 5.3c) entlang der Behälterlängsrichtung (H) höhenverstellbar ist, wobei mit der Höhenverstelleinrichtung (5.6) das Getriebe (5.2), die verstellbaren Halterungsstreben (5.3a - 5.3c) und die Führungsschiene (5.1) höhenverstellbar sind,
**dadurch gekennzeichnet, dass** die Führungseinrichtung (5) ein Gehäuse (5.4a, 5.4b) umfasst, in dem die Antriebswelle (5.21), die Abtriebselemente (5.22a - 5.22c) und die verstellbaren Halterungsstreben (5.3a - 5.3c) gelagert sind, wobei die Höhenverstelleinrichtung (5.6) als höhenverstellbarer Träger (5.6a) ausgebildet ist, an dem das Getriebe (5.2), die verstellbaren Halterungsstreben (5.3a - 5.3c) und die Führungsschiene (5.1) als Einheit angegliedert sind.

2. Behandlungsmaschine (1) nach Anspruch 1, wobei die Antriebswelle (5.21) als Gelenkwelle mit mehreren zueinander geknickt verlaufenden Wellensegmenten (5.23a - 5.23c) ausgebildet ist, und wobei die Wellensegmente (5.23a - 5.23c) jeweils mit einer der verstellbaren Halterungsstreben (5.3a - 5.3c) über eines der Abtriebselemente (5.22a - 5.22c) gekoppelt sind.

3. Behandlungsmaschine (1) nach Anspruch 2, wobei die geknickt verlaufenen Wellensegmente (5.23a - 5.23c) über wenigstens ein Kardangelenk (5.24a, 5.24b) miteinander verbunden sind.

4. Behandlungsmaschine (1) nach einem der vorangegangenen Ansprüche, wobei die verstellbaren Halterungsstreben (5.3a - 5.3c) Zahnstangen und die Abtriebselemente (5.22a - 5.22c) Zahnräder umfassen, und wobei die Zahnräder jeweils in eine der Zahnstangen zur Verstellung eingreifen.

5. Behandlungsmaschine (1) nach Anspruch 2 oder 3 und Anspruch 4, wobei die Zahnräder an den Wellensegmenten (5.23a - 5.23c) angegliedert sind.

6. Behandlungsmaschine (1) nach einem der vorangegangenen Ansprüche, wobei die Führungseinrichtung (5) einen elektrischen oder pneumatischen oder hydraulischen Antrieb (5.5) und / oder einen manuellen Antrieb (5.5), insbesondere in Form eines Handrads oder einer Kurbel für die Antriebswelle (5.21) des Getriebes (5.2) umfasst.

7. Behandlungsmaschine (1) nach Anspruch 1, wobei die verstellbaren Halterungsstreben (5.3a - 5.3c) derart angeordnet sind, dass damit die daran angegliederte Führungsschiene (5.1) in der Behälterradialrichtung (R) verstellbar ist.

8. Behandlungsmaschine (1) nach einem der vorangegangenen Ansprüche, wobei die Führungsschiene (5.1) eine wechselbare Verschleißleiste umfasst.

9. Behandlungsverfahren für Behälter (2), insbesondere Getränkebehälter, wobei die Behälter (2) mit einem Transporteur (3) als Behältermassenstrom transportiert werden und mit einem Behandlungsaggregat (4.1 - 4.4) behandelt werden, wobei die Behälter (2) beim Transport wenigstens abschnittsweise mit einer verstellbaren Führungsschiene (5.1) einer Führungseinrichtung (5) geführt werden,
wobei die Führungsschiene (5.1) mit mehreren verstellbaren Halterungsstreben (5.3a - 5.3c) der Führungseinrichtung (5) verstellt wird, und
dass in einem Getriebe (5.2) durch eine Antriebswelle (5.21) mehrere Abtriebselemente (5.22a - 5.22c) angetrieben werden, die mit den verstellbaren Halterungsstreben (5.3a - 5.3c) gekoppelt sind, wobei eine Verstellbewegung (S) der Antriebswelle (5.21) auf die verstellbaren Halterungsstreben (5.3a - 5.3c) übertragen wird, wobei die Führungsschiene (5.1) in einer Behälterradialrichtung (R) und/oder in einer Behälterlängsrichtung (H) verstellbar ist, wobei die Führungseinrichtung (5) eine Höhenverstelleinrichtung (5.6) umfasst, mit der die Führungsschiene (5.1) separat von der Verstellung durch die verstellbaren Halterungsstreben (5.3a - 5.3c) entlang der Behälterlängsrichtung (H) höhenverstellbar ist, wobei mit der Höhenverstelleinrichtung (5.6) das Getriebe (5.2), die verstellbaren Halterungsstreben (5.3a - 5.3c) und die Führungsschiene (5.1) höhenverstellbar sind,
**dadurch gekennzeichnet, dass** die Führungseinrichtung (5) ein Gehäuse (5.4a, 5.4b) umfasst, in dem die Antriebswelle (5.21), die Abtriebselemente (5.22a - 5.22c) und die verstellbaren Halterungsstreben (5.3a - 5.3c) gelagert sind, wobei die Höhenverstelleinrichtung (5.6) als höhenverstellbarer Träger (5.6a) ausgebildet ist, an dem das Getriebe (5.2), die verstellbaren Halterungsstreben (5.3a - 5.3c) und die Führungsschiene (5.1) als Einheit angegliedert sind.

## Claims

1. Treatment machine (1) for containers (2), in particular beverage containers, with
- a conveyor (3) for conveying the containers (2) as a container mass flow, and
- with a treatment unit (4.1 - 4.4) for treating the containers (2),
wherein the conveyor (3) comprises a guide device (5) with an adjustable guide rail (5.1) for the containers (2),
wherein the guide device (5) comprises several adjustable support struts (5.3a - 5.3c), to which the guide rail (5.1) is attached, and
that the guide device (5) comprises a gear (5.2) with a drive shaft (5.21) and with several output elements (5.22a - 5.22c), wherein the output elements (5.22a - 5.22c) are coupled with the adjustable support struts (5.3a - 5.3c), to transmit an adjusting movement (S) from the drive shaft (5.21) to the adjustable support struts (5.3a - 5.3c), wherein the guide rail (5.1) is adjustable in a container radial direction (R) and/or in a container longitudinal direction (H), wherein the guide device (5) comprises a height adjustment device (5.6), with which the guide rail (5.1) is adjustable in height along the container longitudinal direction (H) separately from the adjustment by the adjustable support struts (5.3a - 5.3c), wherein with the height adjustment device (5.6) the gear (5.2), the adjustable support struts (5.3a - 5.3c) and the guide rail (5.1) are adjustable in height,
**characterized in that** the guide device (5) comprises a housing (5.4a, 5.4b), in which the drive shaft (5.21), the output elements (5.22a - 5.22c) and the adjustable support struts (5.3a - 5.3c) are mounted, wherein the height adjustment device (5.6) is configured as a height adjustable carrier (5.6a), at which the gear (5.2), the adjustable support struts (5.3a - 5.3c) and the guide rail (5.1) are attached as a unit.

2. Treatment machine (1) according to claim 1, wherein the drive shaft (5.21) is configured as a cardan shaft with several wave segments (5.23a - 5.23c) bent towards each other, and wherein the wave segments (5.23a - 5.23c) are each coupled with one of the adjustable support struts (5.3a - 5.3c) via one of the output elements (5.22a - 5.22c).

3. Treatment machine (1) according to claim 2, wherein the bent wave segments (5.23a - 5.23c) are connected by at least one cardan joint (5.24a, 5.24b) with each other.

4. Treatment machine (1) according to one of the preceding claims, wherein the adjustable support struts (5.3a - 5.3c) comprise gear racks and the output elements (5.22a - 5.22c) comprise gear wheels, and wherein the gear wheels each engage in one of the gear racks for adjustment.

5. Treatment machine (1) according to claim 2 or 3 and claim 4, wherein the gear wheels are attached to the wave segments (5.23a - 5.23c).

6. Treatment machine (1) according to one of the preceding claims, wherein the guide device (5) comprises a electric or pneumatic or hydraulic drive (5.5) and/or a manual drive (5.5), in particular in form of a hand wheel or a crank for the drive shaft (5.21) of the gear (5.2).

7. Treatment machine (1) according to claim 1, wherein the adjustable support struts (5.3a - 5.3c) are arranged in such a way, that with it the adjustable guide rail (5.1) attached to it is adjustable in the container radial direction (R).

8. Treatment machine (1) according to one of the preceding claims, wherein the guide rail (5.1) comprises a replaceable wear strip.

9. Treatment method for containers (2), in particular beverage containers, wherein the containers (2) are transported with a conveyor (3) as a container mass flow and are treated with a treatment unit (4.1 - 4.4),
wherein the containers (2) are guided during transport at least in sections by an adjustable guide rail (5.1) of a guide device (5),
wherein the guide rail (5.1) is adjusted by several adjustable support struts (5.3a - 5.3c) of the guide device (5), and
that several output elements (5.22a - 5.22c) are driven in a gear (5.2) via a drive shaft (5.21), which are coupled with the adjustable support struts (5.3a - 5.3c), wherein an adjusting movement (S) of the drive shaft (5.21) is transferred to the adjustable support struts (5.3a - 5.3c), wherein the guide rail (5.1) is adjustable in a container radial direction (R) and/or in a container longitudinal direction (H), wherein the guide device (5) comprises a height adjustment device (5.6), with which the guide rail (5.1) is adjustable in height along the container longitudinal direction (H) separately from the adjustment by the adjustable support struts (5.3a - 5.3c), wherein with the height adjustment device (5.6) the gear (5.2), the adjustable support struts (5.3a - 5.3c) and the guide rail (5.1) are adjustable in height,
**characterized in that** the guide device (5) comprises a housing (5.4a, 5.4b), in which the drive shaft (5.21), the output elements (5.22a - 5.22c) and the adjustable support struts (5.3a - 5.3c) are mounted, wherein the height adjustment device (5.6) is configured as a height adjustable carrier (5.6a), at which the gear (5.2), the adjustable support struts (5.3a - 5.3c) and the guide rail (5.1) are attached as a unit.

## Revendications

1. Machine de traitement (1) pour des récipients (2), en particulier des récipients pour boissons, comprenant
- un dispositif de transport (3) permettant le transport des récipients (2) sous la forme d'un flux massique de récipients, et
- un groupe de traitement (4.1 à 4.4) permettant le traitement des récipients (2), dans laquelle le dispositif de transport (3) comprend un dispositif de guidage (5) destiné aux récipients (2) et muni d'un rail de guidage (5.1) réglable,
dans laquelle le dispositif de guidage (5) comprend plusieurs entretoises de fixation réglables (5.3a à 5.3c) auxquelles le rail de guidage (5.1) est raccordé, et
le dispositif de guidage (5) comprend un mécanisme (5.2) comprenant un arbre d'entraînement (5.21) et plusieurs éléments de sortie (5.22a à 522c), dans laquelle les éléments de sortie (5.22a à 5.22c) sont couplés aux entretoises de fixation réglables (5.3a à 5.3c) afin de transmettre un mouvement de réglage (S) de l'arbre d'entraînement (5.21) aux entretoises de fixation réglables (5.3a à 5.3c), dans laquelle le rail de guidage (5.1) est réglable dans une direction radiale de récipient (R) et/ou dans une direction longitudinale de récipient (H), dans laquelle le dispositif de guidage (5) comprend un dispositif de réglage en hauteur (5.6) avec lequel le rail de guidage (5.1) peut, de manière séparée dudit réglage, être réglé en hauteur le long de la direction longitudinale de récipient (H) grâce aux entretoises de fixation réglables (5.3a à 5.3c), dans laquelle le mécanisme (5.2), les entretoises de fixation réglables (5.3a à 5.3c) et le rail de guidage (5.1) sont réglables en hauteur avec le dispositif de réglage en hauteur (5.6),
**caractérisée en ce que** le dispositif de guidage (5) comprend un boîtier (5.4a, 5.4b) au sein duquel sont logés l'arbre d'entraînement (5.21), les éléments de sortie (5.22a à 5.22c) et les entretoises de fixation réglables (5.3a à 5.3c), le dispositif de réglage en hauteur (5.6) étant réalisé sous la forme d'un support réglable en hauteur (5.6a) au niveau duquel sont raccordés de manière unitaire le mécanisme (5.2), les entretoises de fixation réglables (5.3a à 5.3c) et le rail de guidage (5.1).

2. Machine de traitement (1) selon la revendication 1, dans laquelle l'arbre d'entraînement (5.21) est réalisé sous la forme d'un arbre articulé comprenant plusieurs segments d'arbre (5.23a à 5.23c) s'étendant de manière coudée les uns par rapport aux autres, et dans laquelle les segments d'arbre (5.23a à 5.23c) sont respectivement couplés à l'une des entretoises de fixation réglables (5.3a à 5.3c) par l'intermédiaire d'un des éléments de sortie (5.22a à 5.22c).

3. Machine de traitement (1) selon la revendication 2, dans laquelle les segments d'arbre (5.23a à 5.23c) s'étendant de manière coudée sont reliés entre eux par au moins un joint de cardan (5.24a, 5.24b).

4. Machine de traitement (1) selon l'une quelconque des revendications précédentes, dans laquelle les entretoises de fixation réglables (5.3a à 5.3c) comprennent des crémaillères et les éléments de sortie (5.22a à 5.22c) comprennent des engrenages, et dans laquelle les engrenages viennent respectivement en prise dans une des crémaillères en vue du réglage.

5. Machine de traitement (1) selon la revendication 2 ou 3 et la revendication 4, dans laquelle les engrenages sont raccordés aux segments d'arbre (5.23a à 5.23c).

6. Machine de traitement (1) selon l'une quelconque des revendications précédentes, dans laquelle le dispositif de guidage (5) comprend un entraînement électrique ou pneumatique ou hydraulique (5.5) et/ou un entraînement manuel (5.5), en particulier sous la forme d'un volant ou d'une manivelle destiné(e) à l'arbre d'entraînement (5.21) du mécanisme (5.2).

7. Machine de traitement (1) selon la revendication 1, dans laquelle les entretoises de fixation réglables (5.3a à 5.3c) sont agencées de telle manière que le rail de guidage (5.1) qui s'y raccorde peut être réglé dans la direction radiale de récipient (R).

8. Machine de traitement (1) selon l'une quelconque des revendications précédentes, dans laquelle le rail de guidage (5.1) comprend une baguette d'usure remplaçable.

9. Procédé de traitement pour des récipients (2), en particulier des récipients pour boissons, dans lequel les récipients (2) sont transportés sous la forme d'un flux massique de récipients par un dispositif de transport (3) et sont traités avec un groupe de traitement (4.1 à 4.4), dans lequel les récipients (2) sont guidés par un rail de guidage (5.1) réglable d'un dispositif de guidage (5) au moins par sections pendant le transport,
dans lequel le rail de guidage (5.1) est réglé grâce à plusieurs entretoises de fixation réglables (5.3a à 5.3c) du dispositif de guidage (5), et
plusieurs éléments de sortie (5.22a à 5.22c) couplés aux entretoises de fixation réglables (5.3a à 5.3c) sont entraînés au sein d'un mécanisme (5.2) par un arbre d'entraînement (5.21), dans lequel un mouvement de réglage (S) de l'arbre d'entraînement (5.21) est transmis aux entretoises de fixation réglables (5.3a à 5.3c), dans lequel le rail de guidage (5.1) est réglable dans une direction radiale de récipient (R) et/ou dans une direction longitudinale de récipient (H), dans lequel le dispositif de guidage (5) comprend un dispositif de réglage en hauteur (5.6) avec lequel le rail de guidage (5.1) peut, de manière séparée dudit réglage, être réglé en hauteur le long de la direction longitudinale de récipient (H) grâce aux entretoises de fixation réglables (5.3a à 5.3c), dans lequel le mécanisme (5.2), les entretoises de fixation réglables (5.3a à 5.3c) et le rail de guidage (5.1) sont réglables en hauteur avec le dispositif de réglage en hauteur (5.6),
**caractérisé en ce que** le dispositif de guidage (5) comprend un boîtier (5.4a, 5.4b) au sein duquel sont logés l'arbre d'entraînement (5.21), les éléments de sortie (5.22a à 5.22c) et les entretoises de fixation réglables (5.3a à 5.3c), le dispositif de réglage en hauteur (5.6) étant réalisé sous la forme d'un support réglable en hauteur (5.6a) au niveau duquel sont raccordés de manière unitaire le mécanisme (5.2), les entretoises de fixation réglables (5.3a à 5.3c) et le rail de guidage (5.1).
